# EUROPÄISCHE PATENTSCHRIFT

(11) **EP 1 336 832 B1**
(45) Veröffentlichungstag und Bekanntmachung des Hinweises auf die Patenterteilung: **02.12.2009**
(21) Anmeldenummer: 02003177.9
(22) Anmeldetag: 15.02.2002
(51) Int. Cl.: G01M 5/00

(54) **Verfahren zum Prüfen der Stabilität von Paletten**
Procedure for testing the ruggedness of pallets
Procédé d'essai de la solidité de palettes

(43) Veröffentlichungstag der Anmeldung: 20.08.2003
(73) Patentinhaber: Schaefer Förderanlagen- und Maschinenbau GmbH, 85774 Unterföhring (DE)
(72) Erfinder: Reisinger, Gerhard, 82008 Unterhaching (DE)
(74) Vertreter: Thoma, Michael

(56) Entgegenhaltungen:
- DE-A- 3 916 651
- DE-A- 19 607 713
- GB-A- 2 055 211
- PATENT ABSTRACTS OF JAPAN vol. 013, no. 032 (P-817), 25. Januar 1989 (1989-01-25) & JP 63 231237 A (HITACHI LTD), 27. September 1988 (1988-09-27)

## Beschreibung

Die Erfindung betrifft ein Verfahren zum Prüfen der Stabilität von Paletten, die in mindestens zwei parallelen Ebenen angeordnete Elemente aufweisen, die miteinander verbunden sind.

Die nahezu in sämtlichen Industrien vertretene Palette aus Holz wirft beim Transport auf horizontalen Förderstrecken, in Aufzügen oder in Hochregallagern oft erhebliche Probleme auf, wenn ihre Qualität hinsichtlich der Geometrie, der Stabilität und der Bauart nicht gesichert ist. Viele Betriebe haben aber keine eigenen Paletten, sondern benützen solche aus einem Palettenpool (zum Beispiel Euro-Pool-Palette nach DIN 15146). Die Qualität der rücklaufenden Paletten ist gerade dann nicht vorhersehbar, und die Paletten sind wegen kleinerer oder größerer Schäden oft für einen automatischen Transport nicht mehr geeignet.

Zudem findet seit einiger Zeit eine erhebliche Leistungssteigerung durch eine Erhöhung der Transportgeschwindigkeiten statt. Durch neuartige Flaschenkästen beziehungsweise durch eine erhöhte Ausnutzung der Ladekapazität von Lastkraftwagen kommt es auch zu einer Zunahme der Stapelhöhe auf der Palette. Dadurch ergibt sich neben der Gefahr von Maschinenstörungen auch eine Erweiterung der Gefährdung des Bedienungspersonals, wenn Ladungen auf angebrochenen oder beschädigten Paletten auf den Förderwegen oder in den Block- oder Hochregallagern zusammenstürzen. Somit hat das Problem der Palettenprüfung eine ganz außerordentliche Bedeutung erlangt.

Bei der Prüfung der Paletten sind folgende Kriterien wichtig:
1. Abmessungen. Sie müssen innerhalb eines vorgegebenen Toleranzfeldes liegen.
2. Vollständigkeit der Bauteile, wie zum Beispiel Deckbretter, Laufbretter, Querbretter und Klötze.
3. Die Tragfähigkeit. Sie muß größer sein als die durch die Last und die Fördermittel bedingten Beanspruchungen.
4. Die Bauart der Palette, wie zum Beispiel 3-Holm, Rahmen, Kreuzrahmen.

Je nach Aufgabenstellung sind einige oder auch alle diese Kriterien zu prüfen.

Derzeit sind folgende Prüfverfahren bekannt:
a) Abtasten mit Kontakten, mechanisch oder über Lichtschranken, zur Prüfung der Kriterien 1, 2, und 4. Nachteilig ist hierbei der Aufwand, die Betriebssicherheit bei der Vielzahl von Befehlsgebern und das Fehlen einer Erfassung von lockeren Nagelungen bzw. angebrochenen Brettern.
b) Optische Prüfung über Kameras für die Kriterien 1, 2 und 4. Nachteilhaft ist hierbei ein ganz erheblicher Kostenaufwand und das Fehlen einer Erfassung von lockeren Nagelungen bzw. angebrochenen Brettern.
c) Das aus dem DE 79 23 956 U1 bekannte Druckprüfungs-Verfahren. Bei diesem bekannten Verfahren werden an mehreren Stellen der Palette gegensinnige Prüflasten aufgebracht, und es wird gemessen, in welchem Umfang sich die Palette unter der aufgebrachten Querkraft verformt. Mit diesem bekannten Verfahren lassen sich zwar die vorstehend genannten Kriterien 2 und 3 prüfen. Durch das Aufbringen reiner Querkräfte läßt sich aber der Zustand der Verbindung der verschiedenen Bretter mit den Klötzen der Palette nicht ermitteln. Wenn bei einer genagelten oder geschraubten Palette aus Holz die Verbindung zwischen den Brettern und einem Klotz fehlerhaft ist, dann wird dieser Fehler bei einer reinen Druckbelastung der Palette nicht festgestellt, weil der Klotz die aufgebrachten Druckkräfte einwandfrei aufnimmt. Das gleiche Problem tritt bei einer einstückigen Palette aus Kunststoff auf, wenn im Klotz ein zu den Deck- oder Laufbrettern näherungsweise paralleler Riß vorhanden ist.

Nach den genannten Prüfkriterien 1 bis 4 als fehlerhaft erkannte Paletten können manuell oder automatisch aus der Anlage entfernt, repariert oder entsorgt werden.

Ein allen vorstehend erwähnten bekannten Prüfverfahren gemeinsamer wesentlicher Mangel ist, daß sie die Gesamtstabilität der Paletten nicht erkennen. Es kommt daher immer wieder vor, daß Paletten, deren einzelne Bestandteile durch eine Druckbelastung, daß heißt, mit Querkräften geprüft und für in Ordnung befunden wurden, in der Transportanlage unter Biege- oder Torsionsbelastungen zu Störungen führen. Hauptursache für diese Störungen sind fehlende oder lockere Verbindungselemente zwischen den Brettern und den Klötzen, so daß zwischen diesen Teilen Relativbewegungen in der Ebene der Palette möglich sind. Bei lockeren oder fehlenden Verbindungen ist die Stabilität der Gesamtpalette in vielen Fällen nicht mehr ausreichend, obwohl die einzelnen Bauteile bei der Prüfung mit Querkräften als in Ordnung befunden wurden.

Ein Verfahren, das die Prüfung der Gesamtstabilität von Paletten ermöglicht, ist in JP 63231237 A offenbart. Bei diesem bekannten Verfahren wird auf die Elemente der oberen Ebene mit zwei Druckstempeln in Randbereichen eine nach unten gerichtete Kraft ausgeübt, und auf den mittleren Bereich der unteren Elemente wird von einem Widerlager eine entsprechende Abstützkraft ausgeübt. Aufgrund der gemessenen Biegeverformung der Palette kann deren Biegefestigkeit ermittelt werden, was Rückschlüsse auf den Zustand der in der oberen und unteren Ebene angeordneten Elemente ermöglicht. Bei dieser Anordnung wird die von den Druckstempeln auf die oberen Elemente der Palette ausgeübte Kraft über die Klötze auf die unteren Elemente übertragen. Da es sich hierbei um Druckkräfte handelt, ist eine feste Verbindung der oberen und/oder unteren Elemente mit den Klötzen für die Kraftübertragung nicht erforderlich. Aus der Biegeverformung der oberen und unteren Elemente der Palette lassen daher keine Rückschlüsse ziehen, ob deren Verbindung mit den Klötzen in Ordnung ist.

Ein weiteres Verfahren zur Prüfung der Gesamtstabilität von Paletten ist in der DE 196 07 713 A1 offenbart. Dieses Verfahren sieht vor, daß die Palette an einer Randseite oder an drei Ecken fest eingespannt und auf die gegenüberliegende freie Randseite bzw. auf die vierte Ecke eine Querkraft ausgeübt wird, und daß die Auslenkung der Palette an der freien Randseite bzw. an der freien vierten Ecke gemessen wird. Dieses bekannte Verfahren, bei dem eine Verwindung der Palette bewirkt wird, hat zum Ziel, Euro-ähnliche Paletten mit minderer Torsionssteifigkeit von standardisierten guten Euro-Paletten zu unterscheiden.

Um beim Einsatz für Hochregallager gravierende Störungen zu vermeiden, ist es darüber hinaus wichtig sicherzustellen, daß die Verbindung der Palettenelemente stabil ist, damit keine Bodenbretter herabhängen können. Dieser Mangel kann jedoch mit keinem der vorstehend genannten Verfahren ermittelt werden.

Zum Erkennen einer losen Verbindung von Palettenelementen ist ein Verfahren bekannt, bei dem auf die Bodenbretter eine Zugkraft ausgeübt wird. Pro Bodenbrett sind zwei Greifvorrichtungen vorgesehen (d. h. insgesamt sechs), die das Bodenbrett erfassen oder untergreifen. Danach wird die Palette angehoben, und es wird überprüft, ob sich die Greifeinrichtungen entsprechend mit nach oben bewegen oder bei defekter Verbindung ebenfalls unten bleiben. Nachteil dieses Verfahrens ist der sehr hohe mechanische Aufwand. Die Mechanik ist, da unterhalb der Förderbahn der Paletten liegend, meist schwer zugänglich und darüber hinaus erheblicher Verschmutzung durch die Paletten ausgesetzt. Die Vorrichtung ist störanfällig, da es oftmals zu Verklemmungen mit losen Palettenelementen kommt. Im übrigen können gespaltene Bodenbretter nicht erkannt werden.

Der Erfindung liegt die Aufgabe zugrunde, ein Verfahren zu schaffen, das es ermöglicht, die ordnungsgemäße Verbindung der in verschiedenen Ebenen einer Palette angeordneten Elemente zuverlässig zu überprüfen.

Erfindungsgemäß wird diese Aufgabe mit einem Verfahren gelöst, das dadurch gekennzeichnet ist, daß auf Elemente, die in der gleichen Ebene angeordnet sind, Kräfte aufgebracht werden, die eine Biegeverformung dieser Elemente bewirken, der sich die damit verbundenen Elemente einer anderen Ebene, die nicht im direkten Kraftfluß der Abstützkräfte liegen, aufgrund ihres Biegewiderstandes widersetzen, und daß das Verformungsverhalten der anderen Elemente überwacht wird.

Der Grundgedanke des erfindungsgemäßen Verfahrens besteht also darin, daß die zu prüfenden Verbindungen nicht im direkten Kraftfluß der Abstützkräfte liegen. Wenn der Kraftfluß von den unmittelbar beaufschlagten Elementen zu einem oder mehreren der anderen Elemente unterbrochen ist, dann folgen diese der erzwungenen Bewegung der unmittelbar belasteten Elemente nicht. Die Tatsache, daß eines der Elemente der Verformungsbewegung des damit verbundenen unmittelbar beaufschlagten Elements nicht folgt, ist daher ein untrügliches Anzeichen dafür, daß die Verbindung schadhaft ist.

Das erfindungsgemäße Verfahren ist grundsätzlich nicht an eine bestimmte Bauart einer Palette gebunden, es eignet sich aber insbesondere zum Prüfen von Vierwege-Flachpaletten aus Holz nach DIN 15146 mit Bodenbrettern und Querbrettern, die über Klötze miteinander verbunden sind, und mit Deckbrettern, die mit den Querbrettern verbunden sind. Dabei ist vorgesehen, daß die Palette an der Oberseite im Bereich des Quermittelbretts abgestützt und an der Unterseite der Querrandbretter nach oben gedrückt wird, und daß das Verformungsverhalten der Bodenbretter überwacht wird. Dabei wird über ein Erkennungssystem überwacht, ob sich im kritischen Endbereich der Palette alle Bodenbretter zusammen mit den unmittelbar belasteten Querbrettern nach oben bewegen oder ob bei einer losen Verbindung ein ganzes Bodenbrett oder Teile eines gespaltenen Bodenbretts an der Verformung nicht teilnehmen, d. h. liegen bleiben. Das Bestreben eines Bodenbretts ist es natürlich, dieser Verformung zu widerstehen, d. h. es wird der Verformung nur folgen, wenn die Verbindung einer gewissen Qualität entspricht. Je nach Größe der eingeleiteten Verformung (z. B. Kraft- und/oder Wegbegrenzung) können damit direkte Rückschlüsse auf die Qualität der Verbindung gezogen werden. Die Mindestqualität der Verbindung entspricht dabei der von den Bodenbrettern durch die Verformung verursachten Rückstellkraft.

Mit dem erfindungsgemäßen Verfahren können auch gespaltene Bodenbretter mit schlechter Verbindung erkannt werden. Ein weiterer Vorteil des erfindungsgemäßen Verfahrens besteht darin, daß die zu seiner Durchführung verwendete Einrichtung eine einfache und zuverlässige Mechanik, vor allen im Schmutzbereich unterhalb des Förderers aufweisen kann.

Die Erfindung wird nachfolgend anhand eines in der Zeichnung dargestellten Ausführungsbeispiels näher erläutert. Es zeigt:
Fig. 1 eine schematische Seitenansicht einer Anordnung zum Prüfen der Gesamtstabilität von Paletten, und

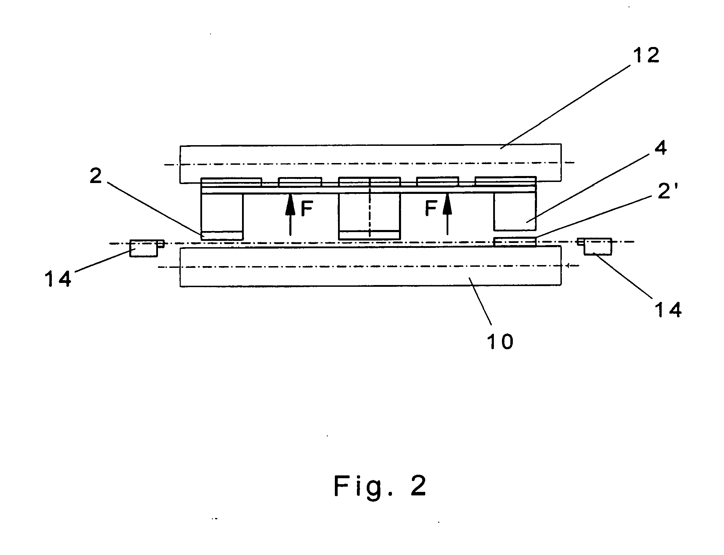

Fig. 2 einen Schnitt nach der Linie A-A in Fig. 1.

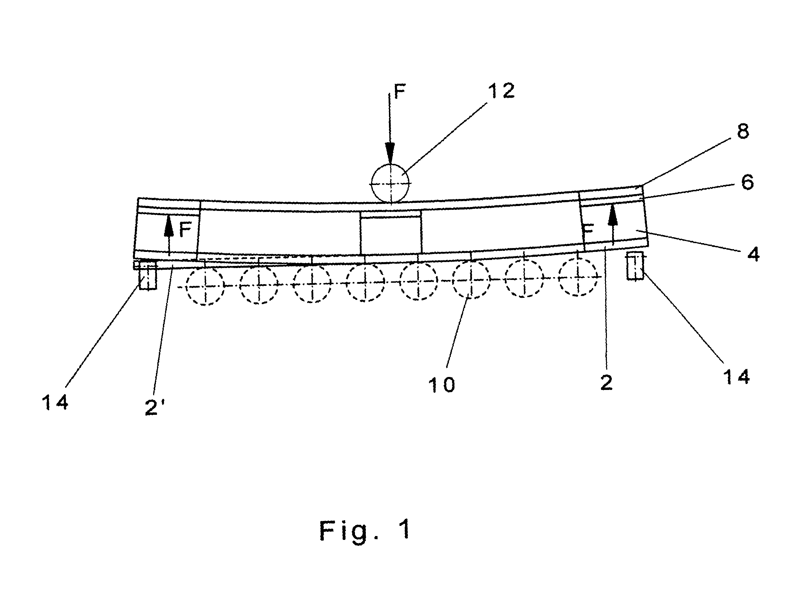

Bei der in der Zeichnung dargestellten Palette handelt es sich um eine Vierwege-Flachpalette aus Holz nach DIN 15146. Eine solche Flachpalette besteht aus drei Bodenbrettern 2, neun Klötzen 4, drei Querbrettern 6 und fünf Deckbrettern 8, die z. B. durch Nagelung miteinander verbunden sind. Die Paletten werden mit einer durch Rollen 10 angedeuteten Fördereinrichtung in eine Prüfzone überführt. In der Prüfzone sind vier (nicht gezeigte) Krafteinheiten angeordnet, um auf die beiden randseitigen Querbretter 6 eine nach oben gerichtete Kraft F auszuüben. In der Prüfzone ist ferner eine zu den Rollen 10 parallele Abstützrolle 12 angeordnet, an der sich die Palette im Bereich des mittleren Querbretts 6 abstützen kann. Unter der von den Krafteinheiten ausgeübten Aktionskraft und der von der Abstützrolle 12 ausgeübten Reaktionskraft kommt es zu einer Biegeverformung der Deckbretter 8. Wenn die Vernagelung der Palette einwandfrei ist, dann müssen die Bodenbretter 2 der Biegeverformung der Deckbretter 8 zwangsweise folgen. Dieser Zustand der Bodenbretter 2 ist in der rechten Hälfte von Fig. 1 gezeigt. Der Lichtstrahl zwischen zwei auf beiden Seiten der Rollenbahn angeordneten Photozellen 14 wird daher nicht unterbrochen. Dies ist ein Zeichen dafür, daß die Vernagelung der Palette in diesem Bereich in Ordnung ist. Wenn jedoch die Vernagelung eines Bodenbretts 2' mit dem zugehörigen Klotz 4 nicht in Ordnung ist, dann kann von dem direkt belasteten Querbrett 6 auf dieses Bodenbrett keine Kraft übertragen werden. Dieses Bodenbrett 2' wird daher, wie in der linken Hälfte von Fig. 1 gezeigt, infolge seines Biegewiderstandes an der Verformung nicht teilnehmen, sondern flach liegenbleiben. Der Lichtstrahl zwischen den in diesem Bereich der Prüfzone angeordneten beiden Photozellen 14 wird demzufolge unterbrochen. Dies zeigt eine ungenügende Vernagelung der Palette an. In diesem Fall wird eine (nicht gezeigte) Auswerfeinrichtung von den Photozellen 14 aktiviert, um eine fehlerhafte Palette auszuwerfen.

Für das vorstehend beschriebene Prüfverfahren ist es wesentlich, daß die zu prüfenden Verbindungen nicht im direkten Kraftfluß der Aktions- und Reaktionskräfte liegen, die eine Biegeverformung von in einer Ebene liegenden Elementen der Palette bewirken. Die in einer anderen Ebene liegenden Elemente der Palette folgen der Biegeverformung der erstgenannten Elemente nur dann, wenn sie mit diesen ordnungsgemäß verbunden sind. Wenn diese Verbindung jedoch schadhaft ist, d. h. wenn der Kraftfluß unterbrochen ist, dann nehmen die letztgenannten Elemente infolge ihres Biegewiderstandes an der Verformung nicht teil. Bei dem vorstehend beschriebenen Beispiel ist dies dann der Fall, wenn die Verbindung der Bodenbretter 2' mit den Klötzen 4 oder die Verbindung der Klötze 4 mit den Querbrettern 6 schadhaft ist. Der Zustand der Verbindung zwischen den Querbrettern 6 und den Deckbrettern 8 kann hingegen nicht geprüft werden, weil er im direkten Kraftfluß der Aktions- und Reaktionskräfte liegt. Die Qualität dieser Verbindungen könnte aber ebenfalls überprüft werden, indem die Aktionskräfte nicht auf die Querbretter 6, sondern unmittelbar auf die Deckbretter 8 ausgeübt werden.

Für den Fachmann ist erkennbar, daß das erläuterte Verfahren zum Prüfen der Gesamtstabilität nicht auf die in der Zeichnung dargestellte standardisierte Euro-Palette beschränkt ist, sondern bei jeder Palette anwendbar ist, die in mindestens zwei parallelen Ebenen angeordnete Elemente aufweist, die miteinander verbunden sind. Es kommt nur darauf an, daß die zu prüfenden Verbindungen nicht im direkten Kraftfluß der die Verbiegung der einen Palettenelemente bewirkenden Abstützkräfte liegen.

Die Abstützkräfte und damit die Verbiegung der einen Palettenelemente muß auch nicht wie in der Zeichnung dargestellt symmetrisch sein. Es kommt nur darauf an, daß sich die anderen Palettenelemente, deren Verbindung geprüft werden soll, aufgrund ihres Trägheitsmomentes einer solchen Verformung widersetzen. Wenn diese Elemente an der Verformung nicht teilnehmen, dann zeigt dies an, daß der Kraftfluß zu den unmittelbar beaufschlagten Palettenelementen unterbrochen ist.

Die zum zwangszweisen Verformen der in einer Ebene angeordneten Palettenelemente dienenden Krafteinheiten können pneumatisch, hydraulisch, mechanisch oder magnetisch betätigbar sein. Anstelle der Photozellen können selbstverständlich auch andere Meßeinrichtungen benutzt werden, mit denen sich feststellen läßt, ob die zu überwachenden Palettenelemente an der zwangsweisen Verformung der unmittelbar beaufschlagten Palettenelemente teilnehmen oder nicht. Bezugszeichenliste:
- 2: Bodenbretter
- 4: Klötze
- 6: Querbretter
- 8: Deckbretter
- 10: Rollen
- 12: Abstützrolle
- 14: Photozellen

## Patentansprüche

1. Verfahren zum Prüfen der Stabilität der Verbindungen von Paletten, die in mindestens zwei parallelen Ebenen angeordnete Elemente aufweisen, die miteinander verbunden sind, **dadurch gekennzeichnet, daß** auf Elemente, die in der gleichen Ebene angeordnet sind, Kräfte aufgebracht werden, die eine Biegeverformung dieser Elemente bewirken, der sich die damit verbundenen Elemente einer anderen Ebene die nicht im direkten Kraftfluß der Aktion-un Reaktionskrüfte liegen, aufgrund ihres Biegewiderstandes widersetzen, und daß das Verformungsverhalten der anderen Elemente überwacht wird.

2. Verfahren nach Anspruch 1 zum Prüfen von Flachpaletten aus Holz mit Bodenbrettern (2) und Querbrettern (6) die über Klötze (4) miteinander verbunden sind, und mit Deckbrettern (8) die mit den Querbrettern verbunden sind, **dadurch gekennzeichnet, daß** die Palette an der Oberseite im Bereich des Quermittelbretts abgestützt und an der Unterseite der Querrandbretter nach oben gedrückt wird, und daß das Verformungsverhalten der Bodenbretter (2) überwacht wird.

## Claims

1. Process for testing the stability of the connections of pallets featuring interconnected elements arranged in at least two parallel levels, **characterised in that** forces are applied on elements arranged in the same level, which produce a bending deformation of these elements which the interconnected elements of another level which are not situated in the direct power flow of the action and reaction forces, resist due to their bending resistance, and that the deformability behaviour of the other elements is monitored.

2. Process according to claim 1 for testing wooden flat pallets with bottom boards (2) and cross boards (6) which are interconnected via blocks (4), and with top boards (8) connected with the cross boards, **characterised in that** the pallet at the top face is supported in the area of the middle cross board and is pressed upwards at the bottom side of the cross lead boards, and that the deformability behaviour of the bottom boards (2) is monitored.

## Revendications

1. Procédure pour tester la stabilité des connexions de palettes qui présentent des éléments jumelés aménagés en au moins deux niveaux parallèles, **caractérisée en ce que** des forces sont exercées sur les éléments aménagés au même niveau, qui produisent une déformation de flexion de ces éléments à laquelle résistent en raison de leur résistance à la flexion, les éléments jumelés d'un autre niveau qui ne se trouvent pas dans le flux de force direct des forces d'action et de réaction, et **en ce que** le comportement de déformation des autres éléments est surveillé.

2. Procédure selon le droit 1 pour tester des palettes plates en bois avec des planches du dessous (2) et des planches transversales (6) jumelées par des plots (4) et avec des planches du dessus (8) qui sont connectées aux planches transversales, **caractérisée en ce que** la palette est supportée en haut dans la section de la planche transversale centrale et pressée vers le haut en dessous des planches transversales marginales, et que le comportement de déformation des planches du dessous (2) est surveillé.
